Europäisches Patentamt

European Patent Office

Office européen des brevets

(11) Publication number: **0 083 226**
**B1**

(12) **EUROPEAN PATENT SPECIFICATION**

(45) Date of publication of patent specification: **04.06.86**

(51) Int. Cl.⁴: **G 10 L 5/06**

(21) Application number: **82306927.3**

(22) Date of filing: **23.12.82**

(54) **A method of speech recognition.**

(30) Priority: **25.12.81 JP 210605/81**
**28.12.81 JP 214175/81**

(43) Date of publication of application:
**06.07.83 Bulletin 83/27**

(45) Publication of the grant of the patent:
**04.06.86 Bulletin 86/23**

(84) Designated Contracting States:
**DE FR GB IT**

(56) References cited:

**IEEE TRANSACTIONS ON ACOUSTICS,
SPEECH AND SIGNAL PROCESSING, vol.
ASSP-23, no. 1, February 1975, pages 67-72,
New York (USA); N.J.MILLER: "Pitch detection
by data reduction"**

**IEEE TRANSACTIONS ON ACOUSTICS,
SPEECH AND SIGNAL PROCESSING, vol.
ASSP-27, no. 4, August 1979, pages 336-349,
New York (USA); L.R. RABINER et al.:
"Speaker-independent recognition of isolated
words using clustering techniques"**

(73) Proprietor: **SHARP KABUSHIKI KAISHA
22-22 Nagaike-cho Abeno-ku
Osaka 545 (JP)**

(72) Inventor: **Hakaridani, Mitsuhiro
856-12 Kidera-cho
Nara-shi Nara-ken (JP)**
Inventor: **Nishioka, Yoshiki
160-19 Syoji-cho
Tenri-shi Nara-ken (JP)**
Inventor: **Iwahashi, Hiroyuki
3-74 Shijyoohji 3-chome
Nara-shi Nara-ken (JP)**

(74) Representative: **Wright, Peter David John et al
R.G.C. Jenkins & Co. 12-15, Fetter Lane
London EC4A 1PL (GB)**

(56) References cited:
**ICASSP 80 PROCEEDINGS-IEEE
INTERNATIONAL CONFERENCE ON
ACOUSTICS, SPEECH AND SIGNAL
PROCESSING, vol. 1 of 3, 9th-11th April 1980,
Denver, IEEE, pages 199-202, New York (USA);**

**R. NAKATSU: "A speech recognition machine
for connected words"**

## Description

This invention is related to a speech recognition system in which the degree of similarity between the feature pattern of the speech to be recognized and the feature patterns of a number of speech types initially recorded or registered are calculated and speech recognition judged.

In a conventional speech recognition system, the degree of similarity with the feature pattern of the speech to be recognized is calculated successively for the feature patterns of a number of prerecorded speech types. The various degrees of similarities calculated are compared, and the feature pattern with the greatest degree of similarity is taken as the recognition result. In this type of speech recognition system, similarities are calculated over all of the frames of the feature patterns even when the feature pattern of the speech to be recognized is being compared with quite dissimilar prerecorded feature patterns. These systems therefore perform unnecessary calculations, avd have poor recognition efficiency and a long processing time.

In "IEEE Transactions on Acoustics, Speech and Signal Processing", February 1975 pages 67 to 72 a speech recognition system is disclosed in which the similarity calculations for a particular prerecorded pattern may be abandoned before the comparison between it and the input speech pattern has been carried out for all the frames. In this way a very dissimilar recorded pattern is rejected more quickly. The system operates by providing a threshold level T(n) for the calculated similarity value after the similarity calculation has reached each of n stages. Each stage has its own respective threshold level. Each threshold level is the sum of a margin value M and a variable S(n). Thus variable S(n) is the lowest similarity value obtained at this stage for all the recorded patterns so far compared. The document actually says that the variable S(n) is replaced whenever the similarity value is less than the threshold T(n), but it appears from the context that in fact this substitution only takes place when the current similarity value is less than the current value of the variable S(n). Thus the value of each threshold level T(n) is set by reference only to the similarity values calculated at that stage.

According to the present invention there is provided a method of speech recognition in which a matching operation is performed, in which matching operation similarities between a speech pattern to be recognised and a registered speech pattern are progressively calculated in order to determine a value indicative of the overall similarity therebetween, and in which succeeding such matching operations involving further registered speech patterns are initiated, and similarity calculations being terminated before they are completed if they produce a result bearing a predetermined relationship with a threshold determined in accordance with a value obtained in a previous such matching operation, characterised in that the said value in accordance with which the said threshold is determined is the said overall similarity value (D) determined in the said previous matching operation.

The method of the present invention has the following advantages over the above-described "IEEE Transactions" system.

1) In the prior art system it is necessary to provide memory locations for storing every one of the threshold values T(n) or every one of the variables S(n). In the present invention only a single previously calculated similarity value (the overall value D) needs to be stored in memory.

2) In the prior art the threshold value T(n) for a given stage (n) is calculated on the basis of the best similarity value obtained for that stage, without taking into account similarity values which have been obtained at other stages. If there is a recorded pattern which has a very great similarity to the input pattern at early stages but not at later stages it will cause very low thresholds to be set for those early stages. A subsequent recorded pattern having a high overall similarity to the input is therefore in danger of being wrongly rejected at an early stage because of these low thresholds. This can be avoided by making the margin M very great, but this means that relatively few reference patterns are rejected before completion of their similarity calculations and so the advantage over the conventional system is lost. The present invention avoids this problem by basing its threshold calculations on an overall similarity value.

In the method of the present invention the said previous matching operation is preferably that matching operation which has produced the overall similarity value indicating the greatest degree of similarity out of all the matching operations so far completed for the said speed pattern to be recognised, whereby the threshold is determined in accordance with the value of the greatest degree of overall similarity so far found.

An embodiment of the present invention, given by way of example, will now be described with reference to the accompanying drawings, in which:

Figure 1 is a block diagram of an embodiment of the present invention;

Figure 2 is an explanatory diagram giving a rough outline of the operation of the embodiment of Figure 1; and

Figure 3 is a flow chart showing the operation of the embodiment of Figure 1.

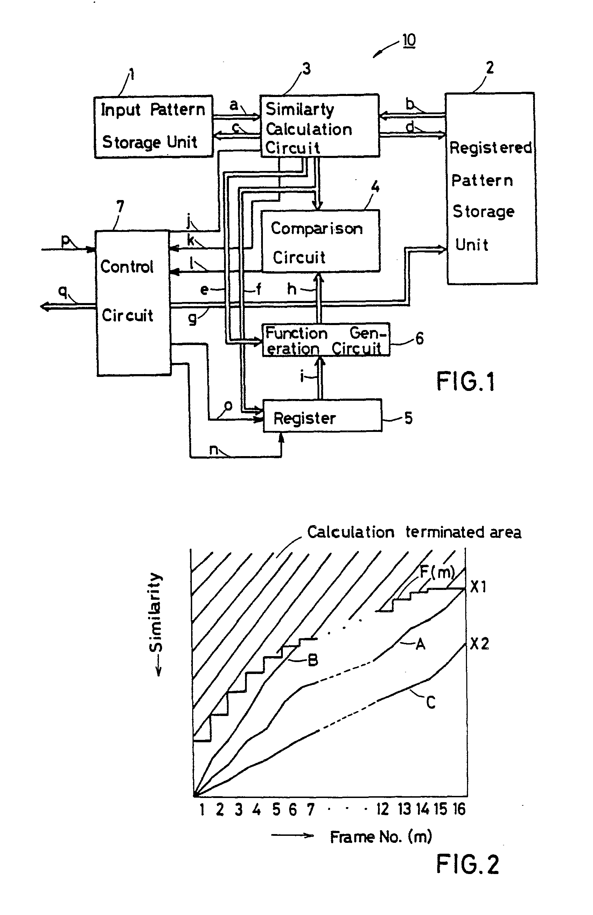

Figure 1 is a block diagram of an embodiment of the present invention. A speech recognition unit 10 is configured around an input pattern storage unit 1, in which the feature patterns of the speech to be recognized are stored, and a registered pattern storage unit 2, in which the feature patterns of a number of prerecorded speech types are stored. The speech recognition unit 10 also includes a similarity calculation circuit 3. The similarity calculation circuit 3 reads out the feature patterns stored in the input pattern storage unit 1 and the feature patterns stored in the registered pattern storage unit 2 frame by frame and calculates the degrees of similarities. The results output from the similarity calculation circuit 3 are fed to a comparison circuit 4 and a register 5. A control circuit 7 controls writing to the register 5 so that it will always memorize the similarity value of the registered pattern having the closest resemblance out of those patterns for which the calculation proceeded through all the frames. The similarity value stored in the register 5 is then fed to a function generation circuit 6. The function generation circuit 6 generates specified threshold values (limit function) based on the similarity value from the register 5 and feeds these to the comparison circuit 4. The comparison circuit 4 compares the similarity values from the similarity calculation circuit 3 with the threshold limit values from the function generation circuit 6 frame by frame and feeds the comparison results to a control circuit 7. The control circuit 7 is provided to operate in conjunction with the registered pattern storage unit 2, the similarity calculation circuit 3, the comparison circuit 4 and the register 5.

A rough outline of the operation of speech recognition unit 10 will now be given, making reference to Figure 2.

To simplify explanations, the input feature patterns and registered feature patterns are both composed of 16 frame feature spectrums of the same time span. If each feature spectrum is expressed as $\vec{a}_e = (\vec{a}_{e1}, \vec{a}_{e2}, \ldots, \vec{a}_{en})$, the similarity value of frame No. 1 can be expressed by

$$s_e = \sum_{i=1}^{n} (\vec{a}_{ei}IN - \vec{a}_{ei}REF)^2.$$

There are various possibilities for the function generated in function generation circuit 6, such as, for example, the following:

F(m)=min(D.(1/4+m/16),D) or
F(m)=min(D.(1/8+√m/4),D)

where "m" is the frame number and D is the closest similarity value (will be set in register 5) so far found from calculations which proceeded up to the final frame. The similarity calculation circuit 3 calculates the cumulative degree of similarity between the input feature patterns and registered feature patterns under the aforementioned conditions in successive frame order. The changes in the degree of similarity with successive frames during this calculation process are shown in Figure 2 (curves A, B and C). Although the similarity values will be calculated frame by frame, the values obtained for each frame will be on a cumulative basis. The similarity value therefore becomes smaller (less similar) as the calculation per frame progresses, and the accumulated similarity value at the final 16th frame will represent the overall similarity value of that feature pattern. (It should be noted that in Figure 2 similarity increases downwardly).

If we take curve A for instance, the overall degree of similarity of this feature pattern will be X 1. Now, if this similarity value X 1 happens to be highest (most similar) of the overall similarity values obtained, similarity value X 1 will be set in the register 5. The function generation circuit 6 will then generate a limit function F (m) explained above based on similarity value X 1. The limit function F (m) forecasts transitions in similarity values for each frame and, as shown in Figure 2, it is a stepped type function in which the values differ per frame. Limit functions F (m) obtained in this way are used as the threshold value to determine whether to continue with similarity value calculations. For example, in the similarity value calculation indicated by curve B, the similarity value in the 6th frame will become smaller than the limit function F (m) (the threshold is exceeded). In this instance, the probability is extremely small that the overall degree of similarity of curve B will become greater than overall similarity X 1 of curve A even if similarities are calculated to the final 16th frame. For this reason, the similarity calculations of curve B will be terminated at the 6th frame and thus eliminate wasteful calculations.

However if the similarity values obtained during the calculation process are always greater than the limit function f (m) such as in the similarity calculations in curve C, similarities will be calculated to the final 16th frame. Overall similarity value X 2 that will be obtained here will be greater than overall similarity value X 1 in curve A. For this reason, the contents of register 5 will be rewritten to become this new similarity value X 2 and the function generation circuit 6 will generate limit functions based on this similarity value X 2.

The above mentioned action will be repeated and, after calculating similarities of all of the registered feature patterns, the largest similarity value will be set in the register 5. In accordance with this, the control circuit 7 will be memorizing the corresponding registered feature pattern addresses and will output these addresses as the recognition results.

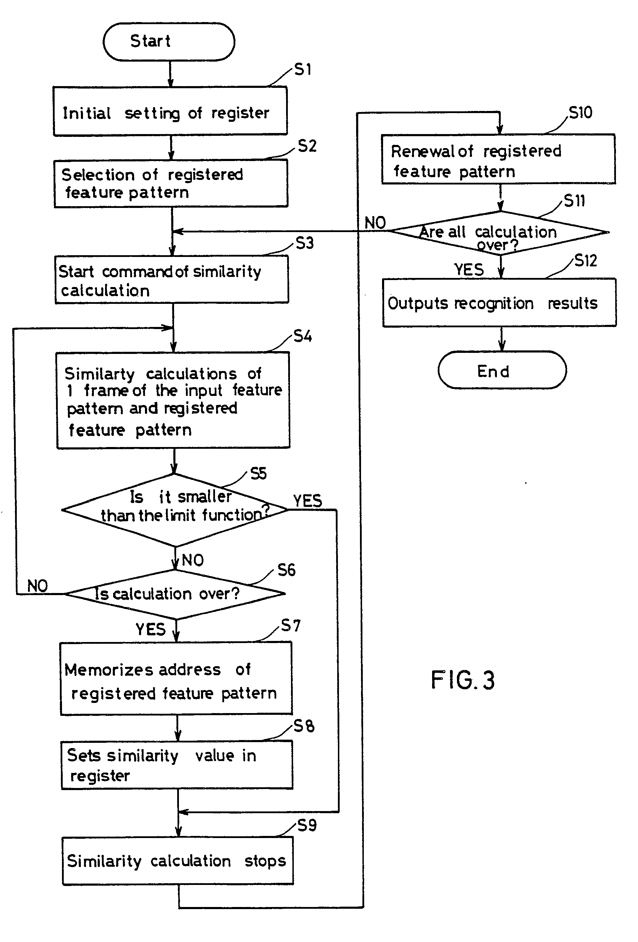

A more detailed explanation of the operation of the embodiment of the present invention in Figure 1 will now be given, making reference to Figures 1 and 3.

First, a recognition start command signal p is fed to the control circuit 7 to begin the recognition operation. In other words, in step 1 (abbreviated as S1 in Figure 3), the control circuit 7 initially sets the register 5 using initial set signal "n". The smallest similarity value (similarity value that indicates the least resemblance) will then be set in the register 5 with this initial setting. Next, in step 2, the control circuit 7 will set the address in the registered pattern storage unit 2 using address data "g" and will select the registered feature pattern for which similarities are to be calculated. In step 3, the control circuit 7 feeds similarity calculation start signal "j" to the similarity calculation circuit 3 and instructs commencement of similarity calculations. In step 4, the similarity calculation circuit 3 calculates the similarity value between the input feature pattern and the registered feature pattern for one frame. That is, the similarity calculation circuit 3 feeds frame No. setting data "c" and "d" to the input pattern storage unit 1 and the registered pattern storage unit 2. The input pattern storage unit 1 feeds corresponding the frame feature pattern data "a" to the similarity calculation circuit 3. In the same manner, the registered pattern storage unit 2 feeds feature pattern data "b" of the corresponding frame of the registered feature pattern selected by the control circuit 7 to the similarity calculation circuit 3. The similarity calculation circuit 3 calculates the similarity value of the frame received. A calculated similarity value "f" is then fed to the comparison circuit 4 and the register 5.

At this time, the similarity calculation circuit 3 will also feed frame No. setting data "e" to the function generator circuit 6. Based on similarity data "i" received from the register 5 and the frame setting data "e" received from the similarity calculation circuit 3, the function generation circuit 6 generates limit function value "h" for this frame and feeds this to the comparison circuit 4. The comparison circuit 4 compares similarity data "f" from the similarity calculation circuit 3 with limit function value "h" from the function generation circuit 6 and, when limit function value "h" is larger than similarity data "f", generates signal I and feeds this to the control circuit 7. In step 5, the control circuit 7 judges whether there is a signal and then judges whether similarity data "f" is smaller than limit function value "h". If similarity data "f" is greater than limit function value "h", in step 6, the control circuit 7 will judge whether similarity calculations have been completed for all frames. This judgement will be based on the existence of completion signal "k" output from the similarity calculation circuit 3 when similarity calculations have been completed for all frames. In other words, if completion signal "k" is no supplied to the control circuit 7 from the similarity calculation circuit 3, the operation in step 4 to step 6 will be repeated. When this happens the similarity calculation circuit 3 provides new frame No. setting data "c", "d" and "e", for the next successive frame. It calculates the similarity value for that frame, accumulates this with the similarity values calculated for the previous frames.

However, when completion signal "k" is fed to the control circuit 7 from the similarity calculation circuit 3, the control circuit 7 will judge that similarity calculations have been completed for all frames and, in step 7, will memorize the address of the registered feature pattern concerned. In addition, in step 8, the control circuit 7 will feed rewrite signal "o" to the register 5 and replace the similarity value set in the register 5 with the overall similarity value of the registered feature pattern obtained in the freshly completed calculation. Next, in step 9, the control circuit 7 outputs similarity calculation stop command signal "j" to the similarity calculation circuit 3. In response to this, the similarity calculation circuit 3 stops calculating similarities.

Next, in step 10, the control circuit 7 provides new address data "g", selecting the next registered feature pattern in the registered pattern storage unit 2. In step 11, the control circuit 7 judges whether similarity calculations have been completed for all registered feature patterns in the registered pattern storage unit 2. If similarity calculations have not been completed for all registered feature patterns, the operations in steps 3 to 11 will be repeated.

Now we shall explain the action involved when the similarity data "f" becomes smaller (less similar) than the limit function value "h" in step 5 previously mentioned. In this instance, similarity calculations will stop immediately in step 9. In other words, similarity calculations will be terminated as shown by curve B in Figure 2.

The action in steps 3 to 11 will be repeated as explained above and, when similarity calculations have been completed on all registered feature patterns, the control circuit 7 will in step 12, output an address "q" of the registered feature pattern the similarity value of which is currently set in the register 5, as the recognition results.

Although it was explained in the foregoing that, in the practical example, the similarity calculation circuit 3 would calculate the similarity value (e.g. Euclid distance) of the input feature pattern and the registered feature pattern in the same frame it can also calculate similarities between optimum frames such as in DP matching, or calculate similarities by some other matching method.

As explained in the foregoing, when a certain specified condition, based on the threshold value and the similarity calculations, is reached in the similarity calculation process for the feature pattern, the need to calculate further similarities for that feature pattern is eliminated. This results in a reduction in the volume of similarity calculations required without decreasing recognition performance. This, therefore, leads to improvements in recognition speed.

The invention being thus described, it will be obvious that it may be varied in many ways.

**Claims**

1. A method of speech recognition in which a matching operation is performed, in which matching operation similarities ($s_e$) between a speech pattern (IN) to be recognised and a registered speech pattern (REF) are progressively calculated in order to determine a value indicative of the overall similarity therebetween, and in which succeeding such matching operations involving further registered speech patterns are initiated, said similarity calculations being terminated before they are completed if they produce a result bearing a predetermined relationship with a threshold determined in accordance with a value obtained in a previous such matching operation, characterised in that the said value in accordance with which the said threshold is determined is the said overall similarity value (D) determined in the said previous matching operation.

2. A method according to claim 1 in which the said previous matching operation is that matching operation which has produced the overall similarity value indicating the greatest degree of similarity out of all the matching operations so far completed for the said speech pattern (IN) to be recognised, whereby the threshold is determined in accordance with the value (D) of the greatest degree of overall similarity so far found.

3. A method according to claim 2 in which the said threshold value F(m) is determined for the $m^{th}$ stage of the said progressive calculation of similarities in accordance with the formula

$$F(m)=\min(D.(1/4+m/16),D).$$

4. A method according to claim 2 in which the said threshold value F(m) is determined for the $m^{th}$ stage of the said progressive calculation of similarity in accordance with the formula

$$F(m)=\min(D.(1/8+\sqrt{m}/4),D).$$

## Patentansprüche

1. Spracherkennungsverfahren, bei dem eine Anpassung durchgeführt wird und bei der Anpassung Ähnlichkeiten $(s_e)$ zwischen einem zu erkennenden Sprachmuster (IN) und einem registrierten Sprachmuster (REF) fortlaufend berechnet werden, um einen die zwischen ihnen vorhandene Gesamtähnlichkeit angebenden Wert zu bestimmen, bei dem aufeinanderfolgend derartige Anpassungen mit weiteren registrierten Sprachmustern durchgeführt werden, und bei dem die Ähnlichkeitsberechnungen vor vollständigem Abschluß beendet werden, wenn durch sie ein Ergebnis erhalten wird, das in einer vorbestimmten Beziehung zu einer Schwelle steht, die in Übereinstimmung mit einem in einer zuvor erfolgten Anpassung erhaltenen Wert bestimmt worden ist, dadurch gekennzeichnet, daß der genannte Wert, mit dem übereinstimmend die Schwelle festgelegt wird, der bei der zuvor erfolgten Anpassung bestimmte Gesamtähnlichkeitswert (D) ist.

2. Spracherkennungsverfahren nach Anspruch 1, dadurch gekennzeichnet, daß die genannte zuvor erfolgte Anpassung diejenige Anpassung ist, bei der ein Gesamtähnlichkeitswert erhalten worden ist, der den größten Ähnlichkeitsgrad von allen bis dahin vollständig abgeschlossenen Anpassungen des zu erkennenden Sprachmusters (IN) angibt, und daß die Schwelle in Übereinstimmung mit dem Wert (D) des bis dahin gefundenen größten Gesamtähnlichkeitsgrades bestimmt wird.

3. Spracherkennungsverfahren nach Anspruch 2, dadurch gekennzeichnet, daß der Schwellenwert F(m) für die m-te Stufe der fortlaufenden Berechnung von Ähnlichkeiten durch die Formel

$$F(m)=\min(D.(1/4+m/16),D)$$

bestimmt ist.

4. Spracherkennungsverfahren nach Anspruch 2, dadurch gekennzeichnet, daß der Schwellenwert F(m) für die m-te Stufe der fortlaufenden Berechnung von Ähnlichkeiten durch die Formel

$$F(m)=\min(D.(1/8+\sqrt{m}/4),D)$$

bestimmt ist.

## Revendications

1. Procédé de reconnaissance de la parole, selon lequel on réalise un opération d'adaptation, lors de laquelle les similitudes $(s_e)$ entre une forme vocale (IN) devant être identifiée et une forme vocale enregistrée (REF) sont calculées progressivement en vue de la détermination d'une valeur indicative de la similitude globale entre ces formes, et selon lequel de telles opérations d'adaptation mettant en jeu d'autres formes vocalles enregistrées sont déclenchées en succession, les calculs de similitude étant interrompus avant qu'ils soient achevés s'ils fournissent un résultat confirmant une relation prédéterminée avec un seuil qui est déterminé en fonction d'une valeur obtenue lors d'une opération antérieure d'adaptation, caractérisé en ce que ladite valeur, en fonction de laquelle ledit seuil est déterminé, est ladite valeur de similitude globale (D) déterminée lors de ladite opération antérieure d'adaptation.

2. Procédé selon la revendication 1, selon lequel ladite opération antérieure d'adaptation est l'opération d'adaptation qui a fourni la valeur de similitude globale indiquant le degré maximum de similitude, parmi toutes les opérations d'adaptation qui ont été effectuées jusqu'alors pour ladite forme vocale (IN) devant être identifiée, ce qui a pour effet que le seuil est déterminé en fonction de la valeur (D) du degré maximum de similitude globale trouvé jusqu'alors.

3. Procédé selon la revendication 2, selon lequel ladite valeur de seuil F(m) est déterminée pour le m-ème échelon dudit calcul progressif de similitude conformément à la formule

$$F(m)=\min(D.(1/4+m/16),D).$$

4. Procédé selon la revendication 2, selon lequel ladite valeur de seuil F(m) est déterminée pour le m-ème échelon dudit calcul progressif de similitude conformément à la formule:

$$F(m)=\min(D.(1/8+\sqrt{m}/4),D).$$

FIG.1

FIG.2

FIG. 3